(19) Europäisches Patentamt
European Patent Office
Office européen des brevets

(11) **EP 2 832 710 B1**

(12) **EUROPEAN PATENT SPECIFICATION**

(45) Date of publication and mention of the grant of the patent:
**19.06.2019 Bulletin 2019/25**

(21) Application number: **12872399.6**

(22) Date of filing: **29.03.2012**

(51) Int Cl.:
*C04B 37/00* (2006.01) *B01D 39/20* (2006.01)
*B01J 35/04* (2006.01) *C04B 41/85* (2006.01)
*C04B 35/565* (2006.01) *C04B 35/626* (2006.01)
*C04B 35/63* (2006.01) *C04B 35/636* (2006.01)
*C04B 35/638* (2006.01) *C04B 38/00* (2006.01)
*C04B 41/50* (2006.01) *C04B 111/00* (2006.01)
*C04B 41/00* (2006.01) *B01D 35/00* (2006.01)
*C04B 35/628* (2006.01)

(86) International application number:
**PCT/JP2012/058471**

(87) International publication number:
**WO 2013/145245 (03.10.2013 Gazette 2013/40)**

(54) **HONEYCOMB STRUCTURE, HONEYCOMB FILTER FOR EXHAUST GAS PURIFICATION, AND EXHAUST GAS PURIFICATION DEVICE**

WABENSTRUKTUR, WABENFILTER ZUR ABGASREINIGUNG UND ABGASREINIGUNGSVORRICHTUNG

STRUCTURE EN NID D'ABEILLES, FILTRE EN NID D'ABEILLES POUR PURIFICATION DE GAZ D'ÉCHAPPEMENT ET DISPOSITIF DE PURIFICATION DE GAZ D'ÉCHAPPEMENT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**04.02.2015 Bulletin 2015/06**

(73) Proprietor: **IBIDEN CO., LTD.**
**Ogaki-shi**
**Gifu 503-8604 (JP)**

(72) Inventors:
• **OTA, Kohei**
**Ibi-gun**
**Gifu 501-0695 (JP)**
• **SHIMADA, Shohei**
**Ibi-gun**
**Gifu 501-0695 (JP)**
• **ITO, Toshihide**
**Ibi-gun**
**Gifu 501-0695 (JP)**

(74) Representative: **Hoefer & Partner Patentanwälte mbB**
**Pilgersheimer Straße 20**
**81543 München (DE)**

(56) References cited:
EP-A1- 1 479 881 EP-A1- 1 707 546
EP-A1- 2 174 921 EP-A1- 2 441 513
WO-A1-2006/137149 WO-A1-2008/120386
JP-A- H01 184 010 JP-A- 2000 218 165
JP-A- 2000 218 165 JP-A- 2007 204 360
JP-A- 2011 037 675 US-A1- 2007 160 825
US-A1- 2008 241 444

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

TECHNICAL FIELD

The present invention relates to a honeycomb structured body, an exhaust gas purifying honeycomb filter, and an exhaust gas purifying device.

BACKGROUND ART

Exhaust gases discharged from internal combustion engines (e.g. diesel engines) contain particulate matter (hereinafter, referred to also as PM) such as soot. In recent years, the PM has been a problem as it is harmful to the environment and the human body. Since exhaust gases also contain harmful gas components such as CO, HC and $NO_x$, the influence of the harmful gas components on the environment and the human body has also been concerned.

Therefore, various honeycomb structured bodies have been developed as exhaust gas purifying devices that are connected to an internal combustion engine to collect PM in exhaust gases and convert the harmful gas components contained in exhaust gases, such as CO, HC and $NO_x$ into non harmful gas. Such honeycomb structured bodies are formed from a porous ceramic material (e.g., cordierite, silicon carbide).

One of those honeycomb structured bodies proposed is a honeycomb structured body that includes a plurality of pillar-shaped porous ceramic honeycomb fired bodies bonded with one another by adhesive layers residing therebetween. The pillar-shaped porous ceramic honeycomb fired bodies each include a large number of cells longitudinally disposed in parallel with one another with a cell wall being interposed therebetween, and either one end of each of the cells is sealed to allow the honeycomb structured body to function as a filter.

As an example of such conventional honeycomb structured bodies, Patent Literature 1 discloses a honeycomb filter that can have reduced thermal stress, is less likely to have cracks, and is excellent in strength and durability even in local temperature changes caused by local combustion or the like.

CITATION LIST

- Patent Literature

Patent Literature 1: WO 03/067041

SUMMARY OF INVENTION

- Technical Problem

In the honeycomb filter disclosed in Patent Literature 1, since the thermal expansion $\alpha_L$ of the adhesive layers and the thermal expansion $\alpha_F$ of the honeycomb fired bodies are designed to have a relation of $0.01 < |\alpha_L - \alpha_F| / \alpha_F < 1.0$, the adhesive layers can reduce the thermal stress generated by local temperature changes.

However, the honeycomb filter disclosed in Patent Literature 1 has the following problem. The honeycomb filter has been developed under an assumption that the honeycomb filter is used within a practical temperature range of 10°C to 800°C, which is a wide temperature range. However, in rare cases, honeycomb filters are used at temperatures beyond the above temperature range, namely at temperatures higher than 800°C, particularly at temperatures not lower than 1200°C. If the above honeycomb filter is used at such extremely high temperatures, the honeycomb filter has cracks inside and the amount of particulate matter such as soot leaking outside exceeds the regulation value.

Investigation for the reason of this problem clarified the following. The silica component in the adhesive layers is crystallized (e.g. cristobalitized) at temperatures not lower than 1200°C, thereby changing the thermal expansion characteristics, and thereby increasing the difference in thermal expansion between the honeycomb fired bodies and the adhesive layers, both of which constitute the honeycomb structured body. Thus, the adhesive layers further expand cracks in the honeycomb fired bodies and thereby problematically promote leakage of particulate matter such as soot.

- Solution to Problem

The inventors of the present invention conducted further investigation based on the above, findings and thereby found that the following method can provide a honeycomb structured body that can control the leakage amount of particulate matter such as soot to be not higher than the regulation value even upon use at temperatures of not lower than 1200°C; a honeycomb filter including the honeycomb structured body; and an exhaust gas purifying device including the honeycomb filter. The method includes preparing adhesive layers containing alumina fibers and inorganic balloons and oxidizing the honeycomb fired bodies to form a silicon-containing oxide layer on the surface of silicon carbide that constitutes the honeycomb fired bodies. Thus, the present invention has been completed.

Thus, the honeycomb structured body according to claim 1 includes a plurality of silicon carbide-based honeycomb fired bodies bonded with one another by adhesive layers residing therebetween,

the plurality of silicon carbide-based honeycomb fired bodies each including a large number of cells longitudinally disposed in parallel with one another with a cell wall being interposed therebetween,

either one end of each of the cells being sealed,

wherein the honeycomb fired bodies contain silicon carbide particles having a surface coated with a silicon-containing oxide layer, and

the adhesive layers contain at least alumina fibers and inorganic balloons.

In the honeycomb structured body according to claim 1, the silicon carbide particles constituting the honeycomb fired bodies have a surface coated with a silicon-containing oxide layer. When the oxide layer is exposed to high temperatures of 1500°C to 1600°C, the endothermic reaction represented by the below equation (1) or (2) proceeds.

Due to this endothermic reaction, the temperature of the honeycomb fired bodies is less likely to increase, which prevents the honeycomb structured body from reaching a high temperature. The equations (1) and (2) each represent the amount of heat absorbed by one mole of $SiO_2$ through the below reaction.

$$SiO_2 = SiO\ (g)\ +\ 1/2O_2\ \ 800\ kJ/mol\ \ \ \ (1)$$

$$SiO_2\ +\ C\ =\ SiO\ (g)\ +\ CO\ \ 700\ kJ/mol\ \ (2)$$

Thus, the amount of heat applied to the adhesive layers can be reduced, and crystallization (cristobalitization) of the silica component in the adhesive layers can be prevented. This can prevent the adhesive layers from further expanding the cracks in the honeycomb fired bodies due to the thermal expansion changes and from promoting the leakage of particulate matter. Additionally, using alumina fibers to reduce the amount of the silica component in the adhesive layers can further enhance this effect.

In the present invention, a silicon carbide-based fired body refers to a fired body that contains 60 weight% or more silicon carbide. The silicon carbide-based fired body may contain other materials in addition to silicon carbide. For example, the silicon carbide-based fired body may contain 40 weight% or less of metal silicon as a material other than silicon carbide. If a silicon carbide-based fired body contains metal silicon, the surface of the metal silicon is also coated with a silicon-containing oxide layer.

Silicon carbide particles constituting a honeycomb fired body have constricted parts called "necks" therebetween which appear when two particles are bonded. Silicon carbide particles are bonded with one another through the necks.

If the surface of the silicon carbide particles is not coated with an oxide layer, the bond angle at a neck is small and the end of the bonded part at the neck is sharp. Thus, when a honeycomb fired body containing such silicon carbide particles receives an external force or heat impact, a stress is concentrated on the end of the bonded part at the neck.

In contrast, if the surface of the silicon carbide particles is coated with an oxide layer, the bond angle of a neck is large and the end of the bonded part at the neck is smooth. Thus, stress concentration on the end of the bonded part at the neck can be reduced. As a result, the honeycomb fired body presumably has improved mechanical strength.

The adhesive layers contain at least alumina fibers and inorganic balloons. Alumina fibers, when used as a material of the adhesive layers, do not cause meltdown or phase transformation until about 1400°C, and thus can have an effect of suppressing expansion of cracks even at high temperatures of not less than 1200°C. Thus, the strength of the adhesive layers is less likely to be deteriorated. Inorganic balloons also have an effect of suppressing expansion of cracks, and thus can prevent mechanical deterioration of the adhesive layers. Furthermore, adhesive layers containing inorganic balloons have a low thermal capacity, and thus can have a large thermal conductivity and reduce the difference in thermal stress caused by PM combustion between the honeycomb fired bodies and the adhesive layers. As a result, cracks in the adhesive layers due to thermal stress difference can be suppressed, and thereby cracks in the honeycomb fired bodies can be suppressed.

In the honeycomb structured body according to claim 2, the alumina fibers have an average length of 25 to 100 $\mu$m, and the inorganic balloons have an average particle size of 70 to 300 $\mu$m.

The adhesive layers constituting the honeycomb structured body according to claim 2 contain alumina fibers with appropriate lengths (average length: 25 to 100 $\mu$m) . Thus, the alumina fibers in the adhesive layers can have a fine dispersibility. Thereby, portions not having inorganic balloons in the adhesive layers can have a reduced number of voids, a dense structure, and improved mechanical strength, and are less likely to have cracks. In addition, alumina fibers with such lengths have an effect of suppressing expansion of cracks, and thus can suppress expansion of cracks even if the adhesive layers have cracks.

In addition, the adhesive layers constituting the honeycomb structured body according to claim 2 contain inorganic balloons with an average particle size of 70 to 300 $\mu$m. Since these inorganic balloons have appropriate sizes for the lengths of the alumina fibers, both the alumina fibers and the inorganic balloons tend to be more finely dispersed, voids are uniformly dispersed, and portions not having inorganic balloons in the adhesive layers can have a more dense structure. Furthermore, finely dispersed inorganic balloons also have an effect of suppressing expansion of cracks. Thus, even if the adhesive layers have cracks, expansion of the cracks can be surely suppressed.

Moreover, adhesive layers containing inorganic balloons have a low thermal capacity and thus can have increased thermal conductivity. Accordingly, the thermal stress difference caused by PM combustion between the honeycomb fired bodies and the adhesive layers can be reduced. As a result, cracks in the adhesive layers due to the thermal stress difference can be suppressed, and thereby cracks in the honeycomb fired bodies may be suppressed.

Alumina fibers with an average length of shorter than 25 $\mu$m, which are too short, tend to coagulate and reduce its dispersibility. Alumina fibers have an effect of suppressing expansion of cracks. However, if alumina fibers have too short a length, the effect of suppressing expansion of cracks is less likely to be achieved. On the other hand, alumina fibers with an average length of longer than 100 $\mu$m, which is too long, tend to be oriented in one certain direction and reduce their dispersibility.

Inorganic balloons with an average particle size of smaller than 70 $\mu$m, which is too small, deteriorate the dispersibility of alumina particles, an inorganic binder, and inorganic particles, tend to cause voids at portions not having the inorganic balloons in the adhesive layers, and are less likely to achieve a dense structure, thereby reducing the strength of the adhesive layers. In contrast, inorganic balloons with an average particle size of greater than 300 $\mu$m, which is too large for the thickness of the adhesive layers, tend to cause portions with low strength in the adhesive layer.

In the honeycomb structured body according to claim 3, the alumina fibers have an aspect ratio (fiber length/fiber diameter) of 3 to 30.

This ratio enables further improvement in mechanical strength of the adhesive layers, and even if the adhesive layers have cracks, expansion of the cracks can be more surely suppressed.

Alumina fibers with an aspect ratio of less than 3 tend to fail to achieve the effect of improving mechanical strength and the effect of suppressing expansion of cracks. Alumina fibers with an aspect ratio of more than 30 tend to cause breakage of alumina fibers during formation of the adhesive layers, and thus tend to fail to achieve the above effect.

In the honeycomb structured body according to claim 1, the oxide layer has a thickness of 100 to 600 nm.

Typically, when PM is combusted in a honeycomb structured body which is used as a honeycomb filter of an exhaust gas purifying device, the honeycomb structure body is under oxidizing atmosphere, and thereby an oxide layer is presumably formed on the honeycomb structured body. However, under such a condition of PM combustion, the honeycomb structured body does not have uniformed temperature distribution and thus the thickness of the resulting oxide layer becomes nonuniform. Thus, formation of an oxide layer with a uniform thickness of 100 to 600 nm is difficult in such a condition.

In contrast, the honeycomb structured body of the present invention, which is coated with an oxide layer with a thickness of not less than 100 nm before use, achieves the effects of the present invention.

An oxide layer with a thickness of 100 to 600 nm reduces the amount of heat applied to the adhesive layers, and thus can prevent crystallization (cristobalitization) of the silica component in the adhesive layers. Furthermore, the ends of bonded parts at necks become smooth as mentioned above, which improves the mechanical strength of the adhesive layers.

An oxide layer with a thickness of less than 100 nm, which is too thin, reduces the amount of heat absorbed by the above endothermic reaction and tends to cause crystallization of the silica component. In addition, an oxide layer with such a thickness may fail to achieve a sufficient effect of reducing the stress concentration on the ends of bonded parts at necks. On the other hand, an oxide layer with a thickness of more than 600 nm, which causes too small bonded parts of the silicon carbide particles at necks, may reduce the mechanical strength. Besides, further increase in the thickness of the oxide layer cannot improve the effect of suppressing crystallization of the silica component in the adhesive layers any further.

In the honeycomb structured body according to claim 4, the adhesive layers further contain inorganic particles and an inorganic binder.

Thereby, the alumina fibers, inorganic balloons, and inorganic particles in the adhesive layers are bonded with the inorganic binder to provide adhesive layers with more excellent mechanical characteristics. Besides, the adhesive layers, which contain inorganic particles, can have a more dense structure and improved mechanical characteristics. Furthermore, the inorganic binder and the inorganic particles penetrate the pores in the outer surface of the honeycomb fired bodies to enhance the bonding strength.

In the honeycomb structured body according to claim 1, the amount of the inorganic balloons is 5.0 to 50.0 vol%.

This maintains the mechanical characteristics of the honeycomb structured body as a filter.

Inorganic balloons in an amount of less than 5.0 vol%, which is too small an amount, deteriorate the dispersibility of the adhesive layer components, tend to cause voids, and may result in reduction in strength of the adhesive layers. Besides, the thermal capacity of the adhesive layers cannot be reduced, thereby failing to reduce the difference in thermal stress caused by PM combustion between the honeycomb fired bodies and the adhesive layers. As a result, the adhesive layers have cracks, which induces cracks in the honeycomb fired bodies and causes soot leakage. Inorganic balloons in an amount of more than 50 vol%, which is too large an amount to the contrary, excessively reduce the amount of other components and tend to cause reduction in strength and expansion of cracks in the adhesive layers.

In the honeycomb structured body according to claim 5, the amount of the alumina fibers in the adhesive layers is 5.0 to 50.0 vol%.

Thereby, the alumina fibers in the adhesive layers can be finely dispersed.

The alumina fibers in an amount of less than 5.0 vol%, which is too small an amount, fail to achieve sufficient effect of reinforcing the adhesive layers by the fibers. Also, the effect of suppressing expansion of cracks is less likely to be achieved. The alumina fibers in an amount of more than 50.0 vol%, which is too large an amount, reduce the dispersibility of the alumina fibers and tend to cause biased mechanical characteristics in the adhesive layers.

In the honeycomb structured body according to claim 6, the inorganic balloons are fly ash balloons.

Fly ash balloons each have a nearly spherical shape and consist of silica and alumina. Accordingly, fly ash balloons will not cause meltdown or the like even when exposed to high temperatures of not lower than 1200°C. Moreover, fly ash balloons, which have a small specific gravity, can reduce the thermal capacity of the adhesive layers. Fly ash balloons, which can reduce the thermal capacity of the adhesive layers as mentioned, can thus reduce the thermal stress difference between the adhesive layers and the honeycomb fired bodies. As a result, cracks in the adhesive layers due to the thermal stress difference, cracks in the honeycomb fired bodies, and soot leakage can be suppressed.

In the honeycomb structured body according to claim 7, the inorganic particles are silicon carbide particles.

Thereby, the resulting adhesive layers are excellent in heat resistance and mechanical characteristics.

In the honeycomb structured body according to claim 8, the inorganic binder is a solidified product of silica sol or alumina sol.

Since silica sol or alumina sol is used as a raw material for forming the inorganic binder, the resulting adhesive layers can have excellent heat resistance.

The exhaust gas purifying honeycomb filter according to claim 9 is disposed in an exhaust passage of an internal combustion engine and is configured to filter particulate matter discharged from the internal combustion engine. The exhaust gas purifying honeycomb filter includes the honeycomb structured body according to any one of claims 1 to 8.

Thereby, even if the exhaust gas purifying honeycomb filter is exposed to high temperatures of higher than 800°C, particularly not lower than 1200°C, the filter is less likely to have cracks. Even if the filter has cracks, expansion of the cracks can be suppressed, whereby the leakage amount of particulate matter such as soot can be controlled to be lower than the regulation value.

The exhaust gas purifying device according to claim 10 includes a casing; an exhaust gas purifying honeycomb filter accommodated in the casing; and a holding sealing material wound around the exhaust gas purifying honeycomb filter and disposed between the exhaust gas purifying honeycomb filter and the casing, wherein the exhaust gas purifying honeycomb filter includes the exhaust gas purifying honeycomb filter according to claim 9.

Thereby, even if the exhaust gas purifying device is exposed to high temperatures of higher than 800°C, particularly not lower than 1200°C, the adhesive layers are less likely to have cracks. Even in the case where the adhesive layers have cracks, the expansion of the cracks can be suppressed, whereby the leakage amount of particulate matter such as soot can be controlled to be lower than the regulation value.

BRIEF DESCRIPTION OF DRAWINGS

Fig. 1 is a schematic perspective view illustrating an example of the honeycomb structured body of the first embodiment of the present invention.

Fig. 2(a) is a schematic perspective view illustrating an example of a honeycomb fired body that constitutes the honeycomb structured body of the present invention. Fig. 2 (b) is an A-A line cross-sectional view of the honeycomb fired body illustrated in Fig. 2(a).

Fig. 3(a) is a schematic explanatory view showing the bonded state of silicon carbide particles constituting honeycomb fired bodies. Fig. 3 (b) is a partially enlarged view of the silicon carbide particles shown in Fig. 3(a).

Fig. 4 is a cross-sectional view illustrating a process of forming an aggregate of honeycomb fired bodies using an adhesive paste.

Fig. 5 is a schematic cross-sectional view illustrating an example of the exhaust gas purifying device according to the first embodiment of the present invention.

DESCRIPTION OF EMBODIMENTS

(First embodiment)

In the following, a first embodiment which is an embodiment of the honeycomb structured body of the present invention is described referring to the figures.

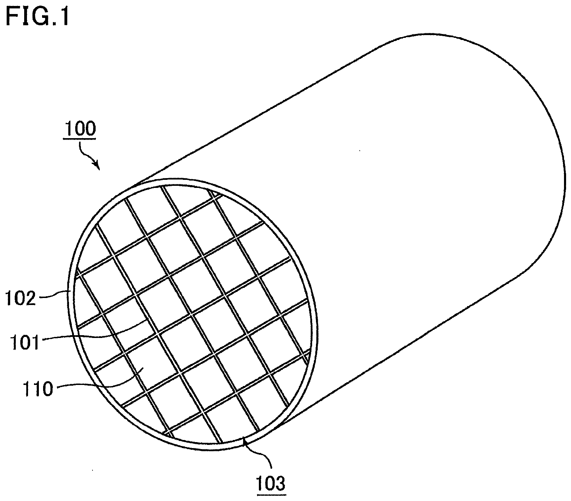

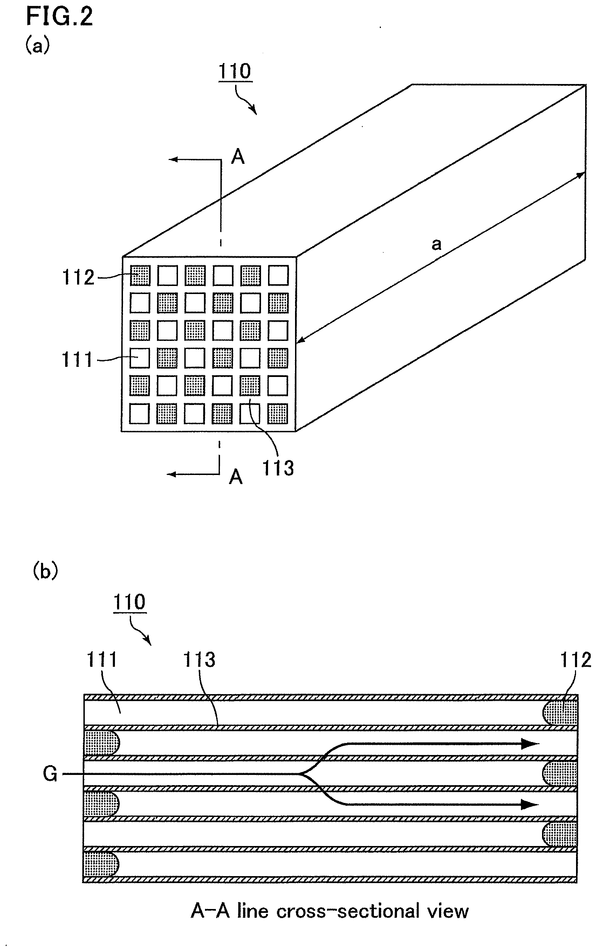

Fig. 1 is a schematic perspective view illustrating an example of the honeycomb structured body according to a first embodiment of the present invention. Fig. 2 (a) is a schematic perspective view illustrating an example of a honeycomb fired body that constitutes the honeycomb structured body of the present invention. Fig. 2(b) is an A-A line cross-sectional view of the honeycomb fired body illustrated in Fig. 2(a).

In a honeycomb structured body 100 illustrated in Fig. 1, a plurality of honeycomb fired bodies 110 having a configuration shown in Fig. 2 (a) and Fig. 2(b) are bonded with one another by an adhesive layers 101 residing therebetween to form a ceramic block 103. The ceramic block 103 further includes a coat layer 102 formed on its periphery.

The honeycomb fired body 110 illustrated in Fig. 2 (a) and Fig. 2(b) has a large number of cells 111 longitudinally (in the direction shown by "a" in Fig. 2(a)) disposed in parallel with one another with a cell wall 113 being interposed therebetween. Either one end of each of the cells 111 is sealed with a plug 112. Therefore, exhaust gas G flowed into one of the cells 111 that is open at one end surely passes through the cell wall 113 that defines the cells 111 and then flows out from other cells 111 that are open at the other end.

Thus, the cell wall 113 functions as a filter for collecting matters such as PM.

Next, a honeycomb fired body 110 constituting the honeycomb structured body 100 according to the first embodiment of the present invention will be described.

The honeycomb structured body 100 of the present embodiment includes silicon carbide-based honeycomb fired bodies 110. The silicon carbide-based honeycomb fired bodies 110 mean fired bodies that contain 60 weight% or more of silicon carbide and 40 weight% or less of metal silicon. The honeycomb fired bodies 110 may not include other ceramics than silicon carbide or may be formed by bonding silicon carbide particles with the metal silicon or the like.

In the honeycomb structured body 100 of the present embodiment, the silicon carbide particles have a surface coated with a silicon-containing oxide layer (hereinafter, also simply referred to as an oxide layer).

The lower limit of the thickness of the oxide layer is 100 nm, preferably 200 nm. The upper limit of the thickness of the oxide layer is 600 nm, preferably 400 nm.

When the honeycomb fired bodies 110 are exposed to high temperatures of 1500°C to 1600°C, the endothermic reaction represented by the below equation (1) or (2) of silica constituting the oxide layer proceeds. Due to this endothermic reaction, the temperature of the honeycomb fired bodies 110 is less likely to increase, and thus the honeycomb structured body 100 including the honeycomb fired bodies 110 can be prevented from reaching high temperatures. The equations (1) and (2) each represent the amount of heat absorbed by one mole of $SiO_2$ through the below reaction.

$$SiO_2 = SiO\ (g) + 1/2O_2\ \ 800\ kJ/mol \qquad (1)$$

$$SiO_2 + C = SiO\ (g) + CO\ \ 700\ kJ/mol \quad (2)$$

Thereby, the amount of heat applied to the adhesive layers 101 can be reduced, and thus crystallization (cristobalitization) of the silica component in the adhesive layers 101 can be prevented. Thus, the adhesive layers 101 can be prevented from further expanding the cracks in the honeycomb fired bodies 110 due to the thermal expansion changes accompanied with crystallization of the silica component and from promoting leakage of particulate matter.

In the honeycomb fired body 110, a large number of the silicon carbide particles as aggregates may be bonded with one another with a large number of pores residing therebetween, or a plurality of silicon carbide particles each containing pores inside may be bonded with one another.

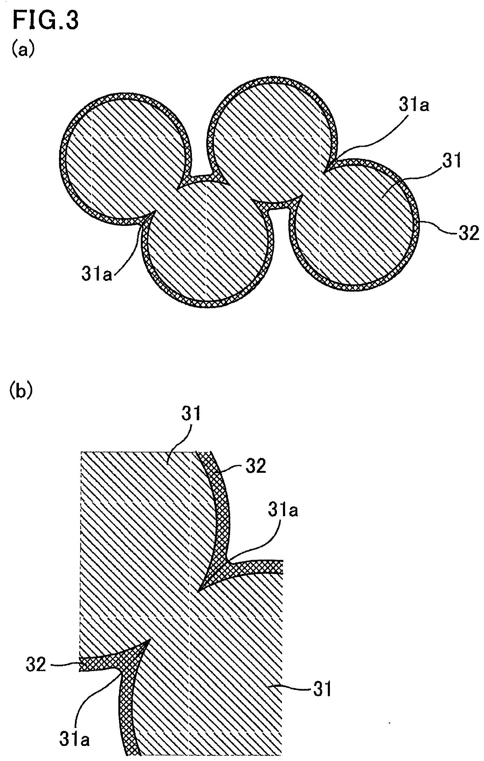

Fig. 3(a) is a schematic explanatory view showing the bonded state of silicon carbide particles constituting the honeycomb fired bodies 110. Fig. 3 (b) is a partially enlarged view of the silicon carbide particles shown in Fig. 3(a).

As shown in Fig. 3(a) and Fig. 3(b), silicon carbide particles 31 constituting the honeycomb fired bodies 110 are bonded with one another through necks 31a. The surface of the silicon carbide particles 31 is coated with a silicon-containing oxide layer 32.

If the oxide layer 32 is formed on the surface of the silicon carbide particles 31, the bond angle at a neck 31a is large, and the end of the bonded part at the neck 31a is smooth. Thus, the stress concentration on the end of the bonded part at the neck 31a can be reduced. This presumably results in improvement in the mechanical strength of the honeycomb fired bodies.

Meanwhile, the silicon carbide particles constituting the honeycomb fired bodies 110 have an average particle size of about 11 to 20 $\mu$m. Thus, the oxide layer with a thickness of 100 to 600 nm, which is extremely thin for the particle size of the silicon carbide particles, will not adversely affect the pressure loss when the resulting honeycomb structured body is used as a filter.

The thickness of the oxide layer may be measured by X-ray photoelectron spectroscopy (XPS). XPS is an analysis method in which the surface of a sample is irradiated with X-ray and generated photoelectron energy is measured with a device called energy analyzer. XPS can analyze the constituent elements of the sample and their electronic state. Alternately repeating X-ray photoelectron analysis and ion sputtering can show composition changes of the sample in the depth direction (thickness direction).

For the honeycomb structured body of the present embodiment, the surface of a sample is eroded by ion sputtering at a constant rate and the composition of the sputtered matters is analyzed by XPS to determine the depth (thickness) of the oxide layer. According to the results given by such a measurement method, an oxide layer with a thickness of 100 to 600 nm is presumably formed on the surface of the silicon carbide particles.

The porosity of the honeycomb fired body 110 is not particularly limited and is preferably about 40 to 70 vol%. A porosity of less than 40 vol% tends to cause the honeycomb structured body 100 to have clogging. A porosity of more than 70 vol% tends to reduce the strength of the honeycomb fired body 110 and thereby cause breakage of the honeycomb fired body 110. The porosity may be measured by mercury intrusion technique, for example.

The average pore diameter of the honeycomb fired body 110 is preferably 5 to 100 $\mu$m. An average pore diameter of smaller than 5 $\mu$m tends to cause particulate matter to easily cause clogging. An average pore diameter of greater than 100 $\mu$m tends to cause particulate matter to pass through the pore, which reduces the capability of collecting particulate matter, and thus deteriorates the function as a filter.

The thickness of the cell wall 113 of the honeycomb fired body 110 of the present invention is not particularly limited, and is preferably 0.1 to 0.4 mm.

The cell wall 113 of the honeycomb fired body 110 with a thickness of less than 0.1 mm, which is too thin for a cell wall supporting the honeycomb structure, may fail to hold the strength of the honeycomb fired body 110. The cell wall 113 of the honeycomb fired body 110 with a thickness of more than 0.4 mm may increase the pressure loss of the honeycomb structured body 100.

The thickness of an outer wall (external wall) of the honeycomb fired body 110 that constitutes the honeycomb structured body 100 of the present invention is not particularly limited, and is preferably 0.1 to 0.4 mm, which is the same as the thickness of the cell wall 113 of the honeycomb fired body 110.

The cell density (number of cells per unit area) in a cross section perpendicular to the longitudinal direction of the honeycomb fired body 110 is not particularly limited. A preferable lower limit thereof is 16.0 pcs/cm$^2$ (100 pcs/inch$^2$), a preferable upper limit thereof is preferably 93 . 0 pcs/cm$^2$ (600 pcs/inch$^2$), a more preferable lower limit is 38.8 pcs/cm$^2$ (250 pcs/inch$^2$), and a more preferable upper limit is 77.5 pcs/cm$^2$ (500 pcs/inch$^2$).

Next, adhesive layers 101 constituting the honeycomb structured body 100 of the first embodiment of the present invention will be described.

In the honeycomb structured body 100 of the present embodiment, the adhesive layers 101, which make the honeycomb fired bodies 110 be bonded with one another, contain at least alumina fibers and inorganic balloons.

The lower limit of the average length of the alumina fibers is preferably 25 $\mu$m, more preferably 40 $\mu$m. The upper limit of the average length of the alumina fibers is preferably 100 $\mu$m, more preferably 60 $\mu$m.

Alumina fibers with an average length of shorter than 25 $\mu$m, which are too short, tend to coagulate and have reduced dispersibility. Alumina fibers have an effect of suppressing expansion of cracks. However, alumina fibers with too short a length are less likely to achieve the effect of suppressing the expansion of cracks. Alumina fibers with an average length of longer than 100 $\mu$m, which are too long, tend to be oriented in one certain direction and have reduced dispersibility.

The aspect ratio (fiber length/fiber diameter) of the alumina fibers is preferably 3 to 30. The alumina fibers having such an aspect ratio can further improve the mechanical strength of the resulting adhesive layer, and can more surely suppress the expansion of cracks even if the adhesive layers have cracks.

The alumina fibers may contain alumina ($Al_2O_3$) only, or may contain silica ($SiO_2$) in addition to alumina.

Specifically, the composition of the alumina fibers is preferably $Al_2O_3$:$SiO_2$ = 65:35 to 99:1, more preferably $Al_2O_3$:$SiO_2$ = 70:30 to 99:1, still more preferably $Al_2O_3$:$SiO_2$ = 72:28 to 98:2, based on weight ratio.

Using the alumina fibers as inorganic fibers, which reduces the amount of the silica component in the adhesive layers, can reduce the above mentioned thermal expansion changes caused by crystallization of the silica component.

The inorganic balloons are not particularly limited and examples thereof include alumina balloons, glass microballoons, shirasu balloons, fly ash balloons (FA balloons), and mullite balloons. Fly ash balloons are preferred among these.

The lower limit of the average particle size of the inorganic balloons is preferably 70 $\mu$m, more preferably 150 $\mu$m. The upper limit of the average particle size of the inorganic balloons is preferably 300 $\mu$m, more preferably 200 $\mu$m.

Inorganic balloons typically have a spherical shape, and thus the average particle size thereof is the average diameter of spherical particles.

Inorganic balloons with an average particle size of smaller than 70 $\mu$m, which are too small, deteriorate dispersibility of the alumina particles, inorganic binder, and inorganic particles, tend to cause the adhesive layers to have voids at portions not having the inorganic balloons, are less likely to achieve a dense structure, and thus lower the strength. Inorganic balloons with an average particle size of greater than 300 $\mu$m, which are too large for the adhesive layer, tend to cause the adhesive layers to have portions with low strength.

The adhesive layers may further include inorganic particles and an inorganic binder.

Examples of the inorganic particles include ceramic particles including nitride ceramics such as aluminum nitride, silicon nitride, boron nitride, and titanium nitride; and carbide ceramics such as silicon carbide, zirconium carbide, titanium carbide, tantalum carbide, and tungsten carbide. These may be used alone or in combination of two or more thereof. Among the inorganic particles, silicon carbide particles are preferred because of their excellent thermal conductivity.

The lower limit of the average particle size of the inorganic particles is preferably 0.01 $\mu$m, more preferably 0.1 $\mu$m. The upper limit of the average particle size of the inorganic particles is preferably 100 $\mu$m, more preferably 15 $\mu$m, still more preferably 10 $\mu$m. Inorganic particles with a particle size of smaller than 0.01 $\mu$m may increase the cost, while inorganic particles with a particle size of greater than 100 $\mu$m may deteriorate the filling rate and lower the bonding strength and the thermal conductivity.

Examples of the inorganic binder include solidified products of silica sol, alumina sol, and titania sol. These may be used alone or in combination of two or more kinds thereof. The inorganic binder is solidified silica, alumina, or titania, which is generated from a fine oxide suspended in an aqueous solution when the adhesive layers are dried or fired, and has a function of bonding the alumina fibers, inorganic balloons, inorganic particles and the like included in the adhesive layer. The inorganic binder also has a function of bonding adhesive layers to the honeycomb fired bodies. Among the inorganic binders, a solidified product of silica sol or alumina sol is preferred.

The solidified product refers to silica, alumina, titania or the like which contains little water and may be formed by forming an adhesive paste layer and then drying the adhesive paste layer or heating the adhesive layers at a temperature higher than the temperature for drying. Such a solidified product may contain OH group(s), crystal water or the like.

The lower limit of the amount of the alumina fibers included in the adhesive layers 101 is preferably 5.0 vol%, more preferably 10 vol%, based on solids content. The upper limit of the amount of the alumina fibers is preferably 50 vol%, more preferably 30 vol%, based on solids content.

The alumina fibers in an amount of less than 5.0 vol%, which is too small an amount, reduce the reinforcing effect of the adhesive layers by the fibers. In addition, the effect of suppressing expansion of cracks is less likely to be achieved. The alumina fibers in an amount of more than 50.0 vol%, which is too large an amount, reduce the dispersibility of the alumina fibers and tend to cause biased mechanical characteristics in the adhesive layers.

The lower limit of the shot content of the alumina fibers is preferably 1 vol%. The upper limit thereof is preferably 10 vol%, more preferably 5 vol%, still more preferably 3 vol%.

A shot content of 1 vol% is difficult to achieve due to manufacturing reasons. A shot content of more than 10 vol% may damage the wall surface of a honeycomb fired body 20. The shot content in the alumina fibers means a weight percentage of the shot (non-fibrous particles), which cannot become fiber and remains as particles, in the alumina fibers.

The lower limit of the amount of the inorganic balloons contained in the adhesive layers 101 is 5.0 vol%, preferably 10 vol%, based on solids content. The upper limit of the amount of the inorganic balloons is 50. 0 vol%, preferably 45 vol%, based on solids content. The inorganic balloons in an amount of less than 5.0 vol%, which is too small an amount, deteriorate the dispersibility of the adhesive layer components, tend to cause voids, and may reduce the strength of the adhesive layers. In addition, since the thermal capacity of the adhesive layers cannot be reduced, the thermal stress difference caused by PM combustion between the honeycomb fired bodies and the adhesive layers cannot be reduced. Thereby, the adhesive layers have cracks, which induce cracks in the honeycomb fired bodies, and then results in soot leakage. The inorganic balloons in an amount of more than 50.0 vol%, which is too large an amount to the contrary, reduce the amounts of other components, and thus tend to cause reduction in strength and expansion of cracks.

The lower limit of the amount of the inorganic particles contained in the adhesive layers 101 is preferably 3 vol%, more preferably 10 vol%, still more preferably 20 vol%, based on solids content. The upper limit of the amount of the inorganic particles is preferably 80 vol%, more preferably 60 vol%, still more preferably 40 vol%, based on solids content. The inorganic particles in an amount of less than 3 vol% may reduce the thermal conductivity. The inorganic particles in an amount of more than 80 vol% may reduce the bonding strength when the adhesive layers 101 are exposed to high temperatures.

The lower limit of the amount of the inorganic binder contained in the adhesive layers 101 is preferably 1 vol%, more preferably 5 vol%. The upper limit of the amount of the inorganic binder is preferably 30 vol%, more preferably 15 vol%, still more preferably 9 vol% . The inorganic binder in an amount of less than 1 vol% may reduce the bonding strength, while the inorganic binder in an amount of more than 30 vol% may reduce the thermal conductivity.

The thickness of the adhesive layers 101 is preferably 0.3 to 3.0 mm.

In the honeycomb structured body 100 according to the first embodiment of the present invention, the adhesive layers 101 having the above configuration penetrate the honeycomb fired bodies 110 at the interfaces of the honeycomb fired bodies 110, the adhesive layers 101 and the honeycomb fired body 110 are firmly bonded with a solidified product of the inorganic binder or the like, and the coat layer 102 is formed on the periphery.

The coat layer 102 may be made of the same materials and the same weight percentage thereof as those of the adhesive layers 101. The thickness of the coat layer 102 is preferably 0.1 to 3 mm.

If the honeycomb structured body 100 does not have grooves exposed at the side face and is formed by combining multiple kinds of honeycomb fired bodies each having an outer wall on an entire side face, a coat layer is not necessary.

Next, the method for manufacturing the honeycomb structured body according to the first embodiment of the present invention will be described.

In the following description, an example where the ceramic constituting the honeycomb fired bodies contains silicon carbide will be described. However, the material of the honeycomb fired bodies may consist of silicon carbide and metal silicon.

(1) In the method for manufacturing a honeycomb structured body according to the present embodiment, first, a molding process is performed by extrusion molding a wet mixture of silicon carbide powder and a binder to form a honeycomb molded body. Specifically, first, a wet mixture for manufacturing a honeycomb molded body is prepared by mixing silicon carbide powder with different average particle sizes, an organic binder, a liquid plasticizer, a lubricant, and water. Subsequently, the wet mixture is charged into an extrusion molding machine and then extrusion molded to form a honeycomb molded body with a predetermined shape.

(2) The honeycomb molded body is cut into a predetermined length and is dried using a dryer such as a microwave drying machine, a hot air drying machine, a dielectric dryer, a low pressure dryer, a vacuum dryer, or a freeze dryer, and then a sealing process is performed in which predetermined ends of the cells are filled with a plug paste for a plug to seal the cells. The plug paste may be the above mentioned ceramic materials (wet mixture).

The conditions for the cutting process, the drying process and the sealing process may be conditions conventionally adopted for manufacturing a honeycomb fired body.

(3) A degreasing process is performed in which organic substances in the honeycomb molded body are heated in a degreasing furnace, and the resulting honeycomb molded body is conveyed to a firing furnace. Then, a firing process is performed to manufacture a honeycomb fired body. The conditions for the degreasing process and the firing process may be conditions conventionally adopted for manufacturing a honeycomb fired body. For example, in the degreasing process, the honeycomb molded body may be heated at 300°C to 650°C under an oxygen-containing atmosphere. In the firing process, the honeycomb molded body may be heated at 2000°C to 2200°C under a non-oxidizing atmosphere to sinter silicon carbide particles in the honeycomb molded body.

Through these processes, a honeycomb fired body with a predetermined shape can be manufactured.

(4) An oxidation process is performed in which the honeycomb fired bodies are oxidized by heating under oxidizing atmosphere at 1100°C to 1400°C for 1 to 30 hours.

By the oxidation process, an oxide layer is formed on the surface of the silicon carbide particles constituting the honeycomb fired bodies.

The oxidation process should be performed under oxygen-containing atmosphere. From the view point of cost, it is preferably performed under air atmosphere.

The oxygen concentration (the amount in terms of oxygen) in oxidizing atmosphere is not particularly limited, and is preferably 5 to 21 vol%. From the view point of cost, using air is preferred.

Atmosphere for oxidation with an oxygen concentration of less than 5 vol% causes unstable oxidation of the surface of the silicon carbide particles of the honeycomb fired bodies, which makes it difficult to form an oxide layer with a desired thickness. Atmosphere for oxidation with an oxygen concentration of less than 5 vol% also requires long term heat treatment, which tends to deteriorate manufacturing efficiency. On the other hand, oxidizing atmosphere with an oxygen concentration of more than 21 vol% requires a process for generating oxidizing atmosphere, such as preparing oxygen gas, which tends to deteriorate manufacturing efficiency.

The heat treating temperature in the oxidation process is preferably 1100°C to 1400°C.

A heat treating temperature of lower than 1100°C makes it difficult to form an oxide layer with a desired thickness. In addition, long term heat treatment is required to form an oxide layer with a desired thickness. On the other hand, a heat treating temperature of higher than 1400°C makes it difficult to control the thickness of the oxide layer.

The time for heat treatment in the oxidation process is preferably 1 to 30 hours, but may be appropriately determined according to factors such as the heat treating temperature and the thickness of the desired oxide layer.

Specifically, if the heat treating temperature is 1200°C, the time for heat treatment is preferably 20 to 22 hours, and if the heat treating temperature is 1400°C, the time for heat treatment is preferably 4 to 5 hours.

If the time for heat treatment is shorter than the lower limit, formation of an oxide layer with a desired thickness is difficult. If the time for heat treatment is longer than the upper limit, the resulting oxide layer has a larger thickness than the desired thickness.

The time for heat treatment herein means the time for maintaining a desired heat treating temperature which is achieved by heating. Thus, the entire time for heating the honeycomb fired body in the oxidation process includes the time required for heating and cooling in addition to the time for heat treatment.

Performing the oxidation process under the above conditions enables formation of an oxide layer with a desired thickness (preferably a thickness of 100 to 600 nm) on the surface of the silicon carbide particles constituting the honeycomb fired bodies.

(5) An adhesive paste layer is formed on the side face of the honeycomb fired body using an adhesive paste.

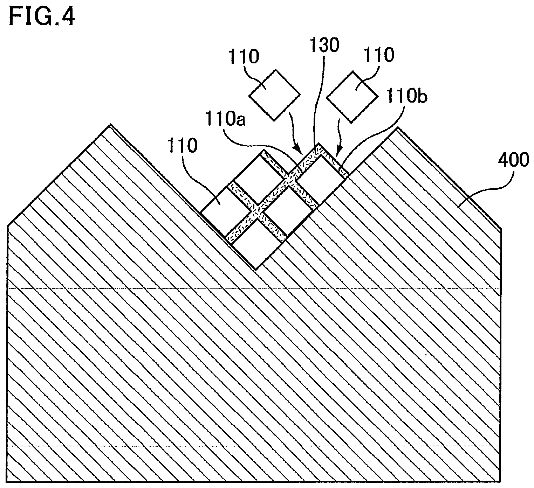

Fig. 4 is a cross-sectional view illustrating a process of forming an aggregate of honeycomb fired bodies using the adhesive paste.

The method for forming the adhesive paste layer is not particularly limited. For example, as shown in Fig. 4, a support 400 having a V-shape cross section is prepared, and one honeycomb fired body 110 (ref. Fig. 2) is placed on the support along the V-shape. The adhesive paste is applied to two up-facing side faces (110a and 110b) of the honeycomb fired body 110 using a squeegee or the like, to form an adhesive paste layer 130 with a predetermined thickness.

. Next, another honeycomb fired body 110 is placed on the adhesive paste layer 130. Then, the adhesive paste is further applied to the up-facing side faces of the another honeycomb fired body 110 to form an adhesive paste layer 130, and the process of placing still another honeycomb fired body 110 the adhesive paste layer 130 is repeated, to form a honeycomb aggregate body which includes a predetermined number of the honeycomb fired bodies with the adhesive paste layers inserted therebetween.

The adhesive paste preferably contains at least alumina fibers, inorganic balloons, and an inorganic binder (e.g. silica sol), and more preferably further contains inorganic particles. The alumina fibers, inorganic balloons, inorganic binder (e.g. silica sol), and inorganic particles may be the same as those described for the honeycomb structured body according to the present embodiment.

Concerning the percentages of the components, if the alumina fibers, inorganic balloons, and inorganic binder are included as main components, the preferred range of each component forming the adhesive paste is as follows. That is, when the adhesive paste is applied to side faces of the honeycomb fired bodies to bond the honeycomb fired bodies and then the honeycomb fired bodies are degreased at 700°C, the solid content concentration of each component is preferably: alumina fibers: 5 to 15 vol%, inorganic balloons: 35 to 45 vol%, and inorganic binder: 10 to 15 vol%.

If the inorganic particles are further added to the above components, the amount of the inorganic particles after degreasing is preferably in a range of 30 to 40 vol%.

The adhesive paste may contain an organic binder. However, if the adhesive paste containing an organic binder is used for an exhaust gas filter for a vehicle, the adhesive layers are exposed to high temperatures and thus tend to cause degradative loss, which can be a cause of fluctuations in the bonding strength. Thus, the amount of the organic binder is preferred to be as small as possible.

Examples of the organic binder include polyvinylalcohol, methylcellulose, ethylcellulose, and carboxymethylcellulose. These may be used alone or in combination of two or more thereof. Among these organic binders, carboxymethylcellulose is preferred.

The lower limit of the amount of the organic binder in the adhesive paste is preferably 0.1 vol%, more preferably 0.2 vol%, still more preferably 0.4 vol%, based on solids content. The upper limit of the amount of the organic binder is preferably 5.0 vol%, more preferably 1.0 vol%, still more preferably 0.6 vol%, based on solids content. The organic binder in an amount of less than 0.1 vol% makes it difficult to suppress the migration of the adhesive layers 101, while the organic binder in an amount of more than 5.0 vol% causes burning out of the organic binder when the adhesive layers 101 are exposed to high temperatures, easily resulting in reduction in bonding strength.

When the adhesive paste is prepared, a dispersion solution may be used. Examples of the dispersion solution include water, organic solvents such as acetone, and alcohols such as methanol.

After the raw materials are mixed, the viscosity of the adhesive paste is adjusted by adding a dispersion solution or the like such that the resulting adhesive paste has a constant viscosity before use. The viscosity of the adhesive paste is preferably 15 to 25 Pa·s (10,000 to 20,000 cps (cP)).

In the above bonding process, the adhesive paste is applied to predetermined side faces of a honeycomb fired body, in which a predetermined end of each cell is sealed, to form an adhesive paste layer, and then the process of stacking another honeycomb fired body on the adhesive paste layer is repeated in series to form a honeycomb block. Alternatively, a honeycomb block may be formed in the following process.

That is, both ends of a predetermined number of honeycomb fired bodies having various shapes are supported and fixed at a predetermined position to form an aggregate body with a predetermined shape such as a round pillar shape, in which the honeycomb fired bodies are combined with predetermined intervals. The aggregate body is preferably accommodated in a case with a predetermined shape, and the case with a predetermined shape preferably has substantially the same capacity and shape as those of the aggregate body.

Next, the adhesive paste is poured into the space formed between the honeycomb fired bodies from an inlet formed on the case, to form adhesive paste layers between the honeycomb fired bodies. The resulting product is then dried and cured to manufacture an aggregate of honeycomb fired bodies which has a large rectangular pillar shape and adhesive layers.

(6) Through the above bonding process, an aggregate of honeycomb fired bodies with a large rectangular pillar shape is formed. Then, a cutting process is performed using a cutter such as a diamond cutter to obtain a honeycomb block with a round pillar or cylindroid shape. Finally, a coat layer forming process, in which a coating agent paste is applied to the periphery of the honeycomb block and then dried and cured to form a coat layer, is performed. The coating agent paste may be the same as or different from the above adhesive paste. Through the above processes, the honeycomb structured body of the present embodiment may be manufactured.

In the above mentioned method for manufacturing a honeycomb structured body, the bonding process is performed to form an aggregate of honeycomb fired bodies with a large rectangular pillar shape. Alternatively, a honeycomb block with a predetermined shape such as a round pillar shape may be formed by bonding honeycomb fired bodies, which have various shapes and an outer wall on their side faces, with an adhesive, and then a coat layer may be formed on the periphery. Here, the coat layer is not necessarily required and may be formed only if needed. If the coat layer is formed, the adhesive paste and the coating agent paste may be dried and solidified at the same time.

In the above mentioned method for manufacturing a honeycomb filter, the oxidation process is performed after manufacturing the honeycomb fired bodies (i.e. between the firing process and the bonding process).

Alternatively, in the method for manufacturing a honeycomb filter of the first embodiment of the present invention, the oxidation process may be performed between the bonding process and the periphery processing process, between the periphery processing process and the periphery coat layer forming process, or after the periphery coat layer forming process. In addition, the oxidation process may be performed to a ceramic block around which a periphery coat layer has not been formed.

The exhaust gas purifying device according to the first embodiment of the present invention will be described.

The exhaust gas purifying device according to the first embodiment of the present invention includes the above honeycomb filter according to the first embodiment of the present invention.

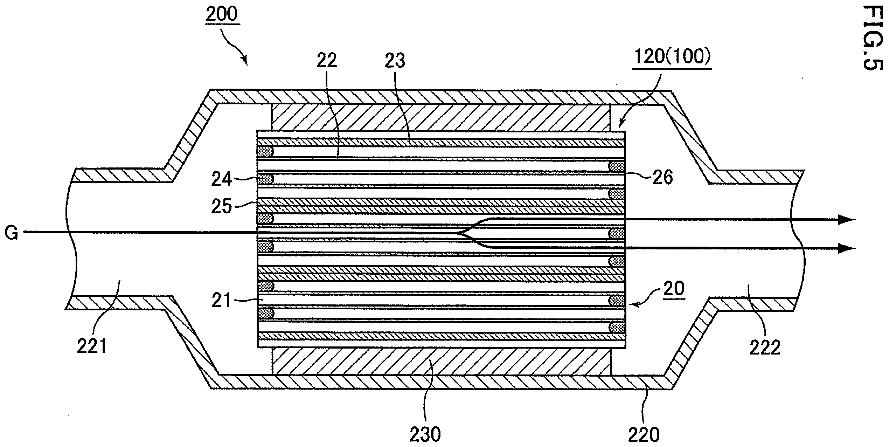

Fig. 5 is a schematic cross-sectional view illustrating an example of the exhaust gas purifying device according to the first embodiment of the present invention.

An exhaust gas purifying device 200 shown in Fig. 5 includes a metal casing 220 provided with a gas inlet side 221 and a gas outlet side 222; and a honeycomb filter 120 accommodated in the metal casing 220.

The exhaust gas purifying device 200 shown in Fig. 5 includes a honeycomb filter 120 that has the same configuration to the honeycomb structured body 100 shown in Fig. 1.

Similar to the configuration of the honeycomb fired body 110 shown in Fig. 2(a) and Fig. 2(b), either one end of each cell 21 of a honeycomb fired body 20 constituting the honeycomb filter 120 is sealed with a plug 24.

A holding sealing material 230 is disposed between the honeycomb filter 120 and the metal casing 220, whereby the holding sealing material 230 supports the honeycomb filter 120.

The holding sealing material 230 is wound around the honeycomb filter 120.

The holding sealing material is made of a mat-like material that mainly contains inorganic fibers such as alumina and has a substantially rectangular shape in a plane view.

At the gas inlet side 221 of the metal casing 220, an inlet pipe is disposed for introducing exhaust gas discharged from an internal combustion engine such as a diesel engine into the exhaust gas purifying device 200. At the gas outlet side 222 of the metal casing 220, an outlet pipe is disposed for discharging the exhaust gas which has passed through the exhaust gas purifying device 200.

A method for purifying exhaust gas according to the first embodiment of the present invention using the exhaust gas purifying device 200 that includes the honeycomb filter 120 will be described referring to Fig. 5.

As shown in Fig. 5, exhaust gas discharged from the internal combustion engine (in Fig. 5, exhaust gas is indicated by G and flow of exhaust gas is indicated by the arrows) flows through the gas inlet side 221 of the metal casing 220 into the exhaust gas purifying device 200. Subsequently, the exhaust gas G flows from one end 25 of the honeycomb fired body 20 into the honeycomb filter 120. Specifically, exhaust gas G flows into a cell 21 that is open at one end 25 of the honeycomb fired body 20.

The exhaust gas G passes through a cell wall 22 that defines the cells 21. At this time, PM in the exhaust gas G is collected at the cell wall 22 and thereby exhaust gas G is purified.

The purified exhaust gas G flows into another cell 21 that is open at the other end 26 of the honeycomb fired body 20 and then is discharged from the honeycomb filter 120. Then, the exhaust gas G is discharged from the gas outlet side 222 of the metal casing 220 to outside of the exhaust gas purifying device 200.

When PM containing soot is collected by the above method, PM accumulates on the cell wall 22 of the honeycomb filter 120 and the pressure loss increases. Thus, when a predetermined amount of PM accumulates, a regenerating process is required in which soot contained in PM is combusted and thereby removed.

In a vehicle with a diesel engine, a common-rail diesel engine is often mounted. In such a case, the engine may be operated at full load to increase the temperature of exhaust gas, and thereby the soot contained in PM accumulating in the honeycomb filter can be forcedly combusted.

Here, the honeycomb filter is generally heated to about 800°C. However, if the regenerating process is not timely performed and the amount of accumulating soot is larger than usual, in other words, if the regenerating process is performed under the state of excessive collecting, the temperature of the honeycomb filter may be increased to not lower than 1200°C.

The honeycomb filter of the present embodiment, which includes the honeycomb structured body according to claim 1, is less likely to have cracks even when the temperature of the honeycomb filter reaches a temperature not lower than 1200°C. Even if the honeycomb filter has cracks, the cracks in the honeycomb filter do not expand entirely, and thus the leakage amount of particulate matter such as soot can be controlled to be not higher than the regulation value.

In the exhaust gas purifying device according to the first embodiment of the present invention, a metal casing may accommodate only a honeycomb filter according to the first embodiment of the present invention, or the honeycomb filter along with a honeycomb structured body to be used as a catalyst support.

In the following, the method for manufacturing an exhaust gas purifying device according to the first embodiment of the present invention will be described.

A honeycomb filter which is according to the first embodiment of the present invention and is manufactured by the above method is placed in a metal casing. Specifically, a mat, which is mainly made of inorganic fibers and has a substantially rectangular shape in a plane view, as a holding sealing material is prepared and wound around the honeycomb filter. Then the honeycomb filter around which the mat is wound is stuffed into a metal casing having a substantially cylinder shape to provide an exhaust gas purifying device.

Alternatively, the metal casing may be prepared as separable parts consisting of a first metal casing and a second metal casing. A honeycomb filter around which a mat made of inorganic fibers is wound is placed in the first metal casing and then covered with the second metal casing, and then the casings are sealed to provide an exhaust gas purifying device.

In the following, function effects of the honeycomb structured body and the method for manufacturing a honeycomb structured body of the present embodiment will be listed.

(1) The surface of the silicon carbide particles constituting the honeycomb fired bodies is coated with a silicon-containing oxide layer. When the oxide layer is exposed to high temperatures of 1500°C to 1600°C, the above mentioned endothermic reaction proceeds. Due to this endothermic reaction, the temperature of the honeycomb fired bodies is less likely to be increased, and thereby the honeycomb structured body can be prevented from reaching high temperatures.

Thus, the heat applied to the adhesive layers can be reduced, and crystallization (cristobalitization) of the silica component in the adhesive layers can be prevented. Thereby, the adhesive layers can be prevented from further expanding the cracks in the honeycomb fired bodies due to thermal expansion changes and from promoting leakage of particulate matter. Furthermore, using alumina fibers and thereby reducing the silica content in the adhesive layers can further improve this effect.

(2) The silicon carbide particles constituting the honeycomb structured body of the present embodiment have constricted parts called "necks", which appear when two particles are bonded with each other. The silicon carbide particles are bonded through the necks.

If the surface of the silicon carbide particles is not coated with an oxide layer, the bond angle at a neck is small and the end of the bonded part at the neck is sharp. Thus, if honeycomb fired bodies containing such silicon carbide particles receive an external force or heat impact, a stress is concentrated on the end of the bonded part at the neck. In contrast, if the surface of the silicon carbide particles is coated with an oxide layer, the bond angle at the neck is large, and the end of the bonded part at the neck is smooth. Thus, the stress concentration on the end of the bonded part at the neck can be reduced. This presumably improves the mechanical strength of the honeycomb fired bodies.

(3) The adhesive layers constituting the honeycomb structured body of the present embodiment contain at least alumina fibers and inorganic balloons. Alumina fibers, when used as a material of the adhesive layers, do not cause meltdown or phase transformation until about 1400°C, and thus provide an effect of suppressing expansion of cracks even at high temperatures of not lower than 1200°C. Thus, the strength of the adhesive layers is less likely to be deteriorated. Inorganic balloons also have an effect of suppressing expansion of cracks, and thus can prevent mechanical deterioration of the adhesive layers. In addition, use of inorganic fibers reduces the amount of the silica component in the adhesive layers. Thus, thermal expansion changes due to crystallization of the silica component are reduced.

Moreover, adhesive layers containing inorganic balloons have a low thermal capacity and thus can have increased thermal conductivity. Accordingly, the thermal stress difference caused by PM combustion between the honeycomb fired bodies and the adhesive layers can be reduced. As a result, cracks in the adhesive layers due to the thermal stress difference can be suppressed, and thereby cracks in the honeycomb fired bodies may be suppressed.

(4) The adhesive layers constituting the honeycomb structured body of the present embodiment contain inorganic balloons with an average particle size of 70 to 300 $\mu$m. These inorganic balloons have appropriate sizes for the lengths of the alumina fibers. Thus, both the alumina fibers and the inorganic balloons tend to be more finely dispersed, voids are uniformly dispersed, and the adhesive layers have a more dense structure at portions not having the inorganic balloons. Moreover, finely dispersed inorganic balloons also have an effect of suppressing expansion of cracks. Thus, even when the adhesive layers have cracks, expansion of the cracks can be surely suppressed.

Furthermore, adhesive layers containing inorganic balloons, which have a reduced thermal capacity, have a large thermal conductivity, and thereby can reduce the difference in thermal stress upon PM combustion between the honeycomb fired bodies and the adhesive layers. As a result, cracks in the adhesive layers due to the difference in thermal stress can be suppressed, and thus cracks in the honeycomb fired bodies can be suppressed.

(5) The adhesive layers constituting the honeycomb structured body of the present embodiment contain alumina fibers with appropriate lengths (average length: 25 to 100 $\mu$m). Thus, the dispersibility of the alumina fibers in the adhesive layers becomes favorable. Thereby, portions not having inorganic balloons in the adhesive layers have a reduced amount of voids, a dense structure, and improved mechanical strength, and are less likely to have cracks. Alumina fibers with the above lengths have an effect of suppressing expansion of cracks. Thus, even when the adhesive layers have cracks, expansion of the cracks can be suppressed.

(6) The adhesive layers constituting the honeycomb structured body of the present embodiment include alumina fibers with an aspect ratio of 3 to 30. Thus, the mechanical strength of the adhesive layers is further improved, and even if the adhesive layers have cracks, expansion of the cracks can be more surely suppressed.

(7) In the honeycomb fired bodies constituting the honeycomb structured body of the present embodiment, the thickness of the oxide layer coating silicon carbide particles is 100 to 600 nm. Thus, heat applied to the adhesive layer can be reduced, and thereby crystallization (cristobalitization) of the silica component in the adhesive layers can be prevented. Furthermore, as mentioned above, the ends of the bonded parts at necks become smooth, which improves the mechanical strength. The thickness of the oxide layer is smaller than the particle size of the silicon carbide particles. Thus, formation of an oxide layer on the silicon carbide particles does not adversely affect the pressure loss and the like of the honeycomb filters.

(8) The adhesive layers constituting the honeycomb structured body of the present embodiment further include inorganic particles and an inorganic binder. Thus, the alumina fibers, inorganic balloons, and inorganic particles in the adhesive layers are bonded one another by the inorganic binder to provide adhesive layers more excellent in mechanical characteristics. In addition, the adhesive layer, which contains inorganic particles, has improved mechanical characteristics. Moreover, the inorganic binder helps the adhesive layers and the honeycomb fired bodies to bond with each other.

(9) The adhesive layers constituting the honeycomb structured body of the present embodiment may contain fly ash balloons as inorganic balloons. Fly ash balloons, which have nearly spherical shapes and consist of silica and alumina, have excellent compatibility with alumina fibers, achieve better dispersion of the alumina fibers in the state that part of the alumina fibers is bonded with fly ash balloons, and thus favorably suppress expansion of cracks and the like.

(10) The amount of the inorganic balloons in the adhesive layers constituting the honeycomb structured body of the present embodiment is 5.0 to 50.0 vol%. Thus, mechanical characteristics as a filter can be maintained.

(11) The amount of the alumina fibers in the adhesive layers constituting the honeycomb structured body of the present embodiment is 5.0 to 50.0 vol%. Thus, the alumina fibers in the adhesive layers can be finely dispersed.

(12) The adhesive layers constituting the honeycomb structured body of the present embodiment may include fly ash balloons as inorganic balloons. Fly ash balloons, which have nearly spherical shapes and are made of silica and alumina, will not cause meltdown even if they are exposed to high temperatures of not lower than 1200°C. Furthermore, fly ash balloons have a small specific gravity, and thus can reduce the thermal capacity of the adhesive layer. Thus, fly ash balloons can reduce the thermal capacity of the adhesive layers and thus can reduce the thermal stress difference between the adhesive layers and the honeycomb fired bodies. As a result, cracks in the adhesive layers due to the thermal stress difference, cracks in the honeycomb fired bodies, and soot leakage can be suppressed.

(13) The adhesive layers constituting the honeycomb structured body of the present embodiment may include silicon carbide particles as inorganic particles. Adhesive layers including silicon carbide can serve as adhesive layers excellent in heat resistance and mechanical characteristics.

(14) The adhesive layers constituting the honeycomb structured body of the present embodiment may include a solidified product of silica sol or alumina sol, as an inorganic binder. Use of a solidified product of silica sol or alumina sol as a raw material for preparing an inorganic binder provides adhesive layers excellent in heat resistance.

(15) In the honeycomb filter of the present embodiment, even if the temperature of the honeycomb filter reaches a temperature not lower than 1200°C due to the reasons such as performing a regenerating process under a state of excessive collecting, cracks do not expand entirely, and the leakage amount of particulate matter such as soot can be controlled to be not higher than the regulation value.

EXAMPLES

(Example 1)

Following describes examples in which the first embodiment of the present invention is more specifically described. It should be noted that the present invention is not limited to this example.

(Honeycomb fired body preparation process)

Coarse powder of silicon carbide (average particle size: 22 $\mu$m, 52.8 weight%) and fine powder of silicon carbide (average particle size: 0.5 $\mu$m, 22.6 weight%) were dry blended. To the mixture were added an acrylic resin (2.1 weight%), an organic binder (methylcellulose, 4.6 weight%), a lubricant (Unilube, manufactured by NOF Corporation, 2.8 weight%), glycerin (1.3 weight%) and water (13.8 weight%). The mixture was kneaded to give a mixed composition, and the composition was subjected to an extrusion molding process by which the composition was extrusion molded. Thereby, a raw honeycomb molded body, which had substantially the same shape as that shown in Fig. 2 (a) and had non-sealed cells, was prepared.

Next, the raw honeycomb molded body was dried using a microwave drying machine to give a dry honeycomb molded body. Then, a paste having the same composition as that of the above raw honeycomb molded body was stuffed in predetermined cells and dried using the drying machine.

The dry honeycomb molded body was subjected to a degreasing process in which the dry honeycomb molded body was degreased at 400°C, and then subjected to a firing process under an argon atmosphere at 2200°C and ordinary pressure for three hours, whereby a honeycomb fired body (porosity: 42%, average pore diameter: 9 $\mu$m, size: 34.3 mm $\times$ 34.3 mm $\times$ 150.5 mm, number of cells (cell density) : 148 pcs/inch$^2$, thickness of cell wall: 0.40 mm) made of a silicon carbide sintered body was manufactured.

The resulting honeycomb fired body was subjected to the following oxidation process.

In the oxidation process, under air atmosphere, the honeycomb fired body was heated from room temperature at a heating rate of 1°C/min. When the maximum temperature reached 1200°C, the temperature was kept for 3 hours by heating. Then, the temperature was gradually cooled to room temperature, and the honeycomb fired body was taken out from the furnace at room temperature (25°C).

By this oxidation process, the surface of the honeycomb fired body was oxidized.

(Preparation of adhesive paste)

An adhesive paste was prepared by mixing and kneading alumina fibers (mullite fibers consisting of $SiO_2$: 20 wt%, $Al_2O_3$: 80 wt%, average fiber length: 60 $\mu$m), fly ash balloons (average particle size: 300 $\mu$m), silicon carbide particles (average particle size: 0.5 $\mu$m), silica sol (solid content concentration: 30 weight%), carboxymethylcellulose, polyvinylalcohol, and water.

(Bonding process)

A support 400 having a V-shaped cross section as shown in Fig. 4 was prepared. The honeycomb fired body was placed on the support 400 along the V-shape. The adhesive paste with the above composition was applied to up-facing side faces of the honeycomb fired body 110 using a squeegee, to form an adhesive paste layer. Subsequently, the process of stacking another honeycomb fired body 110 on the adhesive paste layer was repeated in series to form an object including 16 honeycomb fired bodies 110 bonded with the adhesive paste layers residing therebetween. The adhesive paste layer was dried and solidified at 180°C for 20 minutes. Thus, a honeycomb aggregate body having a rectangular pillar shape and 1-mm-thick adhesive layers 101 was prepared.

(Periphery processing process and coat layer forming process)

Next, the periphery of the honeycomb aggregate body was ground with a diamond cutter to have a round pillar shape, thereby forming a ceramic block 103.

Subsequently, a coating agent paste having the same materials as those for the adhesive paste was formed into a 0.2-mm-thick coating agent paste layer on the periphery of the ceramic block. Then, the coating agent paste layer was dried at 120°C to manufacture a honeycomb structured body (honeycomb filter) which had a round pillar shape (diameter: 143.8 mm $\times$ length: 150.5 mm) and a coat layer 102 on the periphery. Table 1 shows the characteristics of the components in the adhesive layers constituting the manufactured honeycomb structured body and the composition of the adhesive layer.

(Comparative Example 1)

A honeycomb structured body was manufactured in the same manner as in Example 1, except that, in the preparation of the adhesive paste, bio-soluble fibers ($SiO_2$: 62.4 wt%, $Al_2O_3$: 1.2 wt%, CaO: 34.2 wt%, $ZrO_2$: 0.01 wt%, $K_2O$: 1.0 wt%, $Na_2O$: 0.13 wt%) were used in place of the alumina fibers, inorganic balloons were not used, and the oxidation process of the honeycomb fired bodies was not performed.

Table 1 shows the characteristics of the components in the adhesive layers constituting the manufactured honeycomb structured body and the composition of the adhesive layer.

Evaluation of honeycomb structured body

(1) Measurement of the thickness of oxide layer by X-ray photoelectron spectroscopy (XPS)

Concerning each honeycomb structured body according to the example and the comparative example, the thickness (nm) of the oxide layer of a honeycomb fired body was measured.

As a sample for XPS measurement, a piece (2 cm $\times$ 2 cm $\times$ 0.25 mm) of silicon carbide was cut out from each honeycomb fired body manufactured in the example and the comparative example. A surface not being the fracture surface of the sample for XPS measurement was observed.

The XPS device used was Quantera SXM, manufactured by ULVAC-PHI, and the X-ray source used was monochromated Al-K$\alpha$. Meausurement conditions were set as follows: electric voltage: 15 kV, output power: 25 W, measurement region: 100 $\mu$m$\phi$. Ion sputtering conditions were set as follows: ion species: Ar$^+$, electric voltage: 1 kV, sputtering rate (in terms of $SiO_2$) : 1.5 nm/min.

Using the XPS device, the sample for XPS measurement was subjected to qualitative analysis (wide scan) and depth profile analysis on C, 0, and Si. From the results of the depth profile analysis, the thickness of the oxide layer was calculated based on the time taken until the middle strength between the maximum strength and the minimum strength of $SiO_2$ profile and the sputtering rate (in terms of $SiO_2$) of the sample for XPS measurement.

Table 1 shows measurement results of the thicknesses of the oxide layers coating the silicon carbide particles constituting the honeycomb fired bodies of Example 1 and Comparative Example 1.

(2) Measurement of the amount of PM (number of PM) leaking after regenerating process

The number of PM leaking after the regenerating process was measured using the following PM leakage amount measurement device.

The PM leakage amount measurement device includes a 2-L (litter) common-rail diesel engine, an exhaust gas tube for passing through exhaust gas from the engine, a metal casing which is connected to the exhaust gas tube and in which a honeycomb filter is fixed with a holding sealing material, and a PM counting device (MEXA-100SPCS, manufactured by HORIBA) which can accumulatively count the number of PM passed through the honeycomb filter for a certain period of time.

Each honeycomb structured body (honeycomb filter) of Example 1 and Comparative Example 1 was subjected to PM collecting and then to a regenerating process according to the following procedure.

First, each honeycomb filter manufactured in Example 1 and Comparative Example 1 was placed in an exhaust passage of the engine. Then, a catalyst support (diameter: 200 mm, length: 100 mm, cell density: 400 cells/inch$^2$, amount of platinum supported: 5 g/L), which is a honeycomb structured body made of commercially available cordierite, was mounted at the position nearer to the gas inlet side than the honeycomb filter to provide an exhaust gas purifying device.

Subsequently, the engine was operated under the conditions of rotation speed of engine: 1500 min$^{-1}$, torque: 50 Nm, and thereby exhaust gas was passed through the honeycomb filter. Next, the operating conditions were changed to rotation speed of engine: 2000 min$^{-1}$, torque: 90 Nm, and the engine was operated until the engine went stable, and thereby the honeycomb filter was allowed to collect 21 g/L of PM, which was a larger amount than a usual collecting amount.

Then, post injection was continued until the temperature at the exhaust gas inlet side of the honeycomb filter reached about 550°C to increase the pressure difference between the front and the rear of the honeycomb filter, whereby PM was combusted.

Then, the increased pressure difference between the front and the rear of the honeycomb filter was reduced due to PM combustion. At 10 seconds from the reduction, the driving condition was returned to idling.

Subsequently, the engine was operated in a usual mode at a rotation speed of engine of 1500 $min^{-1}$ and a torque of 50 Nm, and thereby the number of PM (#/km) leaking from the honeycomb filter was measured using the PM counting device.

The number of PM indicates the number of PM leaking from the honeycomb filter at the point where the vehicle is assumed to have driven 1 km by operating the engine.

(Evaluation method of PM leakage)

The numbers of leaking PM of not more than $1.0 \times 10^{12}$ were evaluated as good in Table 1, which means that the leakage amount was small and the filter performance was good. The numbers of leaking PM of not less than $1.0 \times 10^{12}$ were evaluated as poor in Table 1, which means that the leakage amount was large and the filter performance was insufficient.

Table 1 shows the results.

[Table 1]

| | Adhesive layer | | | | | | Honeycomb fired body | Characteristics of honeycomb structured body |
| | Alumina fibers | | Fly ash balloons | | Solidified product of silice sol | Silicon carbide powder | | |
| | Average length (μm) | Amount (vol%) | Average Particle (μm) | Amount (vol%) | Amount (vol%) | Amount (vol%) | Thickness of oxide layer (nm) | Soot leakage |
|---|---|---|---|---|---|---|---|---|
| Example 1 | 60 | 10.2 | 300 | 40.9 | 12.3 | 36.6 | 200 | Good |
| Comparative Example 1 | - | 46.6 | - | 0 | 10.4 | 43.0 | 0 | Poor |

17

The measurement results of soot leakage measured before and after the regenerating process of the honeycomb structured body (honeycomb filter) of Example 1 clarified the following. In the honeycomb structured body according to the example, honeycomb fired bodies containing carbide particles coated with an oxide layer with a thickness of 200 nm were used, and adhesive layers containing alumina fibers and fly ash balloons were formed. Thus, the honeycomb structured body could maintain the strength even when exposed to heat at high temperatures, suppress expansion of cracks to the entire honeycomb structured bodies even after exposed to temperatures of not lower than 1200°C, and control the leakage amount of particulate matter such as soot to be not higher than the regulation value.

In contrast, in the honeycomb structured body in Comparative Example 1, bio-soluble fibers were used as inorganic fibers contained in the adhesive layers, inorganic balloons were not used, the honeycomb fired bodies were not oxidized, and an oxide layer was not formed. Such a honeycomb structured body does not have an oxide layer on the honeycomb fired bodies. Thus, if the honeycomb structured body is exposed to temperatures not lower than 1200°C, the temperature of the honeycomb fired bodies increases, cracks expand to the entire honeycomb structured bodies, the strength of the adhesive layers tends to be reduced, and the leakage amount of particulate matter such as soot exceeds the regulation value.

The shape of the honeycomb fired body is not particularly limited, and is preferably a shape easily being bonded when the honeycomb fired bodies are bonded with one another to prepare a honeycomb structured body. Examples of the cross section include square, rectangle, hexagon, and sector.

The shape of the honeycomb structured body of the present invention is not limited to round pillar shapes, and may be any shape such as cylindroid and rectangular pillar shapes.

The wet mixture, which is a raw material of the honeycomb molded body, may contain an organic binder, a plasticizer, a lubricant, a dispersion solution, and the like in addition to ceramic powder as a main component of the honeycomb structured body.

The organic binder is not particularly limited and examples thereof include methylcellulose, carboxymethylcellulose, hydroxyethylcellulose, and polyethylene glycol. Methylcellulose is preferred among these. Typically, the amount of the organic binder is preferably 1 to 10 parts by weight for each 100 parts by weight of the ceramic powder.

The plasticizer is not particularly limited and examples thereof include glycerin. The lubricant is not particularly limited and examples thereof include polyoxyalkylene compounds such as polyoxyethylene alkylether and polyoxypropylene alkylether.

The plasticizer and the lubricant may not be contained in mixed raw material powder if not needed.

Examples of the dispersion solution include water and organic solvents such as benzene, and alcohols such as methanol.

The wet mixture may further contain a molding aid.

The molding aid is not particularly limited and examples thereof include ethylene glycol, dextrin, fatty acids, fatty acid soap, and polyalcohols.

Furthermore, the wet mixture may optionally contain pore-forming agents such as balloons which are hollow microspheres and made from an oxide ceramic component, spherical acrylic particles, and graphite.

The balloons are not particularly limited and examples thereof include alumina balloons, glass microballoons, shirasu balloons, fly ash balloons (FA balloons), and mullite balloons. Alumina balloons are preferred among these.

The plug paste for sealing cells is not particularly limited and a plug paste that allows the porosity of the resulting plug manufactured through the later processes to be 30 to 75% is preferred. For example, the same paste as that for the wet mixture may be used.

The honeycomb structured body may support a catalyst for purifying exhaust gas. The catalyst to be supported is preferably a noble metal such as platinum, palladium, or rhodium, more preferably platinum. Other examples of the catalyst include alkali metals such as potassium and sodium, and alkaline-earth metal such as barium. These catalysts may be used alone or in combination of two or more thereof.

The method for manufacturing the honeycomb structured body of the present invention may be a method of preparing a plurality of honeycomb aggregate bodies, forming adhesive paste layers (adhesive paste layers including a foaming material) on side faces of the honeycomb aggregate bodies, and bonding the plurality of honeycomb aggregate bodies one another in a bonding process.

REFERENCE SIGNS LIST

| | |
|---|---|
| 20, 110: | honeycomb fired body |
| 21, 111: | cell |
| 24, 112: | plug |
| 22, 113: | cell wall |

| 31 | silicon carbide particles |
| 31a | neck |
| 32 | oxide layer |
| 100: | honeycomb structured body |
| 101: | adhesive layer |
| 102: | coat layer |
| 103: | ceramic block |
| 110a, 110b: | side face |
| 120: | honeycomb filter |
| 130: | adhesive paste |
| 200: | exhaust gas purifying device |
| 220: | metal casing |
| 221: | gas inlet side |
| 222: | gas outlet side |
| 230: | holding sealing material |

**Claims**

1. A honeycomb structured body comprising:

   a plurality of silicon carbide-based honeycomb fired bodies bonded with one another by adhesive layers residing therebetween,
   the plurality of silicon carbide-based honeycomb fired bodies each comprising a large number of cells longitudinally disposed in parallel with one another with a cell wall being interposed therebetween,
   either one end of each of the cells being sealed,
   wherein the honeycomb fired bodies comprise silicon carbide particles having a surface coated with a silicon-containing oxide layer, and
   the adhesive layers comprise at least alumina fibers and inorganic balloons,
   wherein the oxide layer has a thickness of 100 to 600 nm, and wherein the amount of the inorganic balloons is 5.0 to 50.0 vol%.

2. The honeycomb structured body according to claim 1, wherein the alumina fibers have an average length of 25 to 100 $\mu$m, and the inorganic balloons have an average particle size of 70 to 300 $\mu$m.

3. The honeycomb structured body according to claim 1 or 2, wherein the alumina fibers have an aspect ratio (fiber length/fiber diameter) of 3 to 30.

4. The honeycomb structured body according to any one of claims 1 to 3, wherein the adhesive layers further contain inorganic particles and an inorganic binder.

5. The honeycomb structured body according to any one of claims 1 to 4, wherein the amount of the alumina fibers is 5.0 to 50.0 vol%.

6. The honeycomb structured body according to any one of claims 1 to 5, wherein the inorganic balloons are fly ash balloons.

7. The honeycomb structured body according to claim 4, wherein the inorganic particles are silicon carbide particles.

8. The honeycomb structured body according to claim 4, wherein the inorganic binder is a solidified product of silica sol or alumina sol.

9. An exhaust gas purifying honeycomb filter disposed in an exhaust passage of an internal combustion engine and configured to filter particulate matter discharged from the internal combustion engine, the honeycomb filter comprising the honeycomb structured body according to any one of claims 1 to 8.

10. An exhaust gas purifying device comprising:

a casing;

an exhaust gas purifying honeycomb filter accommodated in the casing; and

a holding sealing material wound around the exhaust gas purifying honeycomb filter and disposed between the exhaust gas purifying honeycomb filter and the casing,

wherein the exhaust gas purifying honeycomb filter comprises the exhaust gas purifying honeycomb filter according to claim 9.

**Patentansprüche**

1. Wabenstrukturkörper, umfassend:

eine Vielzahl von gebrannten Wabenkörpern auf Siliziumcarbidbasis, die durch dazwischenliegende Haftschichten miteinander verbunden sind,

wobei die Vielzahl von auf Siliziumcarbidbasis gebrannten Wabenkörpern jeweils eine große Anzahl von Zellen umfasst, die in Längsrichtung parallel zueinander angeordnet sind, wobei eine Zellwand dazwischen angeordnet ist, wobei jeweils ein Ende einer jeden der Zellen versiegelt ist,

wobei die gebrannten Wabenkörper Siliziumcarbidpartikel mit einer Oberfläche umfassen, die mit einer siliziumhaltigen Oxidschicht beschichtet ist, und

die Haftschichten zumindest Aluminiumoxidfasern und anorganische Ballone aufweisen,

wobei die Oxidschicht eine Dicke von 100 bis 600 nm aufweist und wobei die Menge der anorganischen Ballone 5,0 bis 50,0 Vol.-% beträgt.

2. Wabenstrukturkörper nach Anspruch 1, wobei die Aluminiumoxidfasern eine durchschnittliche Länge von 25 bis 100 $\mu$m aufweisen und die anorganischen Ballone eine durchschnittliche Partikelgröße von 70 bis 300 $\mu$m aufweisen.

3. Wabenstrukturkörper nach Anspruch 1 oder 2, worin die Aluminiumoxidfasern ein Seitenverhältnis (Faserlänge/Faserdurchmesser) von 3 bis 30 aufweisen.

4. Wabenstrukturkörper nach einem der Ansprüche 1 bis 3, wobei die Haftschichten ferner anorganische Partikel und ein anorganisches Bindemittel enthalten.

5. Wabenstrukturkörper nach einem der Ansprüche 1 bis 4, wobei die Menge der Aluminiumoxidfasern 5,0 bis 50,0 Vol.-% beträgt.

6. Wabenstrukturkörper nach einem der Ansprüche 1 bis 5, wobei die anorganischen Ballone Flugasche-Ballone sind.

7. Wabenstrukturkörper nach Anspruch 4, wobei die anorganischen Partikel Siliziumkarbidpartikel sind.

8. Wabenstrukturkörper nach Anspruch 4, wobei das anorganische Bindemittel ein verfestigtes Produkt aus Siliziumdioxid-Sol oder Aluminiumoxid-Sol ist.

9. Abgasreinigungswabenfilter, der in einem Abgaskanal eines Verbrennungsmotors angeordnet ist und zum Filtern von aus dem Verbrennungsmotor ausgestoßenem Feinstaub konfiguriert ist, wobei der Wabenfilter den strukturierten Wabenkörper nach einem der Ansprüche 1 bis 8 umfasst.

10. Abgasreinigungsvorrichtung, umfassend:

ein Gehäuse;

einen Abgasreinigungswabenfilter, der im Gehäuse untergebracht ist; und

ein Haltedichtungsmaterial, das um den Abgasreinigungswabenfilter gewickelt ist und zwischen dem Abgasreinigungswabenfilter und dem Gehäuse angeordnet ist,

wobei der Abgasreinigungswabenfilter den Abgasreinigungswabenfilter nach Anspruch 9 umfasst.

**Revendications**

1. Corps à structure en nid d'abeilles comprenant :

une pluralité de corps cuits en nid d'abeilles à base de carbure de silicium liés les uns aux autres par des couches adhésives se trouvant entre ceux-ci,

la pluralité de corps cuits en nid d'abeilles à base de carbure de silicium comprenant chacun un grand nombre de cellules disposées longitudinalement en parallèle les unes avec les autres avec une paroi de cellule interposée entre celles-ci,

l'une ou l'autre des extrémités de chacune des cellules étant scellée,

où les corps cuits en nid d'abeilles comprennent des particules de carbure de silicium ayant une surface revêtue d'une couche d'oxyde contenant du silicium, et

les couches adhésives comprennent au moins des fibres d'alumine et des ballonnets inorganiques,

où la couche d'oxyde a une épaisseur allant de 100 à 600 nm, et où la quantité des ballonnets inorganiques est de 5,0 à 50,0% en volume.

2. Corps à structure en nid d'abeilles selon la revendication 1, dans lequel les fibres d'alumine ont une longueur moyenne allant de 25 à 100 μm, et les ballonnets inorganiques ont une dimension de particule moyenne allant de 70 à 300 μm.

3. Corps à structure en nid d'abeilles selon la revendication 1 ou 2, dans lequel les fibres d'alumine ont un rapport d'aspect (longueur de fibre/diamètre de fibre) allant de 3 à 30.

4. Corps à structure en nid d'abeilles selon l'une quelconque des revendications 1 à 3, dans lequel les couches adhésives contiennent en outre des particules inorganiques et un liant inorganique.

5. Corps à structure en nid d'abeilles selon l'une quelconque des revendications 1 à 4, dans lequel la quantité des fibres d'alumine est de 5,0 à 50,0% en volume.

6. Corps à structure en nid d'abeilles selon l'une quelconque des revendications 1 à 5, dans lequel les ballonnets inorganiques sont des ballonnets de cendres volantes.

7. Corps à structure en nid d'abeilles selon la revendication 4, dans lequel les particules inorganiques sont des particules de carbure de silicium.

8. Corps à structure en nid d'abeilles selon la revendication 4, dans lequel le liant inorganique est un produit solidifié de sol de silice ou de sol d'alumine.

9. Filtre en nid d'abeilles de purification de gaz d'échappement disposé dans un passage d'échappement d'un moteur à combustion interne et configuré pour filtrer une matière particulaire évacuée du moteur à combustion interne, le filtre en nid d'abeilles comprenant le corps à structure en nid d'abeilles selon l'une quelconque des revendications 1 à 8.

10. Dispositif de purification de gaz d'échappement comprenant :

un boîtier ;

un filtre en nid d'abeilles de purification de gaz d'échappement logé dans le boîtier ; et

un matériau d'étanchéité de fixation enroulé autour du filtre en nid d'abeilles de purification de gaz d'échappement et disposé entre le filtre en nid d'abeilles de purification de gaz d'échappement et le boîtier,

où le filtre en nid d'abeilles de purification de gaz d'échappement comprend le filtre en nid d'abeilles de purification de gaz d'échappement selon la revendication 9.

FIG.1

## FIG.2

(a)

(b)

A-A line cross-sectional view

# FIG.3

(a)

(b)

FIG.4

FIG.5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 03067041 A